# EUROPÄISCHE PATENTANMELDUNG

(11) **EP 2 863 073 A1**
(43) Veröffentlichungstag der Anmeldung: **22.04.2015**
(21) Anmeldenummer: 13189555.9
(22) Anmeldetag: 21.10.2013
(51) Int. Cl.: F16B 13/06

(54) **Spreizanker mit bereichsweise hochfester Spreizhülse**

(71) Anmelder: HILTI Aktiengesellschaft, 9494 Schaan (LI)
(72) Erfinder: Gstach, Peter, 9494 Schaan (LI); Winkler, Bernhard, 6800 Feldkirch (AT); Meier, Robert, 6800 Feldkirch-Gisingen (AT); Rickers, Peter, 9468 Sax (CH); Scholz, Patrick, 9470 Buchs (CH)
(74) Vertreter: Hilti Aktiengesellschaft Corporate Intellectual Property

(57) **Zusammenfassung**

Die Erfindung betrifft einen Spreizanker mit einem Bolzen und zumindest einer Spreizhülse, welche den Bolzen umgibt, wobei am Bolzen ein Spreizkonus angeordnet ist, welcher die Spreizhülse radial aufweitet, wenn er in die Spreizhülse eingezogen wird. Erfindungsgemäss ist vorgesehen, dass die Spreizhülse im Bereich ihres dem Spreizkonus zugewandten, vorderen Endes eine Härte grösser als 350 HV aufweist, wobei die Härte der Spreizhülse zum hinteren Ende der Spreizhülse hin abnimmt. Die Erfindung betrifft auch ein Herstellungsverfahren für einen solchen Spreizanker.

## Beschreibung

Die Erfindung betrifft einen Spreizanker gemäss dem Oberbegriff des Anspruchs 1. Ein solcher Spreizanker ist ausgestattet mit einem Bolzen und zumindest einer Spreizhülse, welche den Bolzen umgibt, wobei am Bolzen ein Spreizkonus angeordnet ist, welcher die Spreizhülse radial aufweitet und insbesondere radial nach aussen drängt, wenn der Spreizkonus in die Spreizhülse eingezogen wird. Die Erfindung betrifft ferner ein Herstellungsverfahren für einen solchen Spreizanker.

Ein gattungsgemässer Spreizanker ist beispielsweise aus der US 2010/0135743 A1 bekannt. Er wird dazu verwendet, um Bauteile an einem Bohrloch in einem festen Substrat, beispielsweise in Beton, zu verankern. Der bekannte Spreizanker weist einen länglichen Bolzen auf, der im Bereich seines vorderen Endes mit einem Spreizkonus versehen ist. Der Spreizkonus weitet sich zum vorderen Ende hin, das heisst entgegen der Auszugsrichtung, auf. In Auszugsrichtung versetzt zum Spreizkonus ist am Bolzen eine Spreizhülse angeordnet. Diese Spreizhülse ist zum vorderen Ende des Bolzens hin auf den Spreizkonus verschiebbar am Bolzen gelagert. Die Spreizhülse hat aussenseitig radial vorstehende Erhebungen, mit denen sich die Spreizhülse an der Innenwand des Bohrlochs im Substrat verhaken kann. Der Spreizanker wird mit dem ersten Ende voran entgegen der Auszugsrichtung in das Bohrloch eingeschlagen und anschliessend wird der Bolzen in Auszugsrichtung wieder ein Stück weit aus dem Bohrloch herausgezogen. Nach dem Einschlagen des Spreizankers verhakt sich die Spreizhülse an der Innenwand des Bohrlochs und wird daher beim Herausziehen des Bolzens im Bohrloch zurückgehalten. Hierdurch wird der Spreizkonus des Bolzens in die Spreizhülse gezogen, wobei die Spreizhülse aufgrund des zunehmenden Durchmessers des Spreizkonus aufgespreizt wird. Dabei verklemmt sich der Spreizanker mit der Spreizhülse im Substrat, so dass Zuglasten in das Substrat übertragen werden können. Dieses Grundprinzip kann vorzugsweise auch bei der Erfindung verwirklicht werden.

Gemäss der besagten US 2010/0135743 A1 ist ein Spreizelement aus einem Material mit einer Vickershärte von ungefähr 218 HV bis 290 HV und eine Hülse aus einem Material mit einer Vickershärte von ungefähr 218 HV bis ungefähr 290 HV vorgesehen.

Aufgabe der Erfindung ist es, einen besonders zuverlässigen Spreizanker mit besonders guten Lastwerten anzugeben, der zugleich besonders einfach zu fertigen ist. Weiterhin ist es Aufgabe, ein besonders einfaches, günstiges und zuverlässiges Herstellungsverfahren für einen solchen Spreizanker anzugeben.

Die Aufgabe wird erfindungsgemäss durch einen Spreizanker mit den Merkmalen des Anspruchs 1 und ein Herstellungsverfahren mit den Merkmalen des Anspruchs 8 gelöst. Bevorzugte Ausführungsformen des Spreizankers sind in den abhängigen Ansprüchen angegeben.

Ein erfindungsgemässer Spreizanker ist dadurch gekennzeichnet, dass die Spreizhülse im Bereich ihres dem Spreizkonus zugewandten, vorderen Endes eine Härte nach Vickers grösser als 350 HV aufweist, wobei die Härte der Spreizhülse zum hinteren Ende der Spreizhülse hin abnimmt. Insbesondere nimmt die Härte der Spreizhülse ausgehend von 350 HV zum hinteren Ende der Spreizhülse hin ab.

Ein Grundgedanke der Erfindung kann in einem speziellen Härteverlauf gesehen werden, bei welchem der vordere Bereich der Spreizhülse, der beim Setzen des Spreizankers vom Spreizkonus radial verdrängt und mit der umgebenden Bohrlochwand verpresst wird, zumindest bereichsweise, vorzugsweise durchgehend, hochfest ist, also eine Härte grösser 350 HV aufweist, und bei dem der hintere Bereich der Spreizhülse niederfester ist. Versuche und Simulationen haben gezeigt, dass hierdurch ein Spreizanker erhalten werden kann, der speziell auch in gerissenem Beton besonders gute Lasteigenschaften aufweist, und der zugleich besonders einfach und günstig herstellbar ist.

Die Erfindung hat in diesem Zusammenhang erkannt, dass die guten Lasteigenschaften in gerissenem Beton ihren Grund in der Restvorspannung haben können, die sich im Ankerbolzen eines vorgespannten Ankers einstellt, nachdem sich ein Riss, in welchem sich der Spreizanker befindet, ein Stück weit, beispielsweise 0.3 mm bis 0.5 mm, geöffnet hat. Im Falle von herkömmlichen Spreizankern mit Härten im vorderen Hülsenbereich zwischen 80 HV und 300 HV wurde bei einer solchen Rissöffnung eine deutliche Verringerung der Vorspannkraft, teilweise sogar auf null, beobachtet. Wurde hingegen für den vorderen Hülsenbereich entsprechend der Erfindung eine Härte grösser als 350 HV gewählt, so konnten deutlich höhere Restvorspannungen beobachtet werden. Diese erfindungsgemäss höheren Restvorspannungen nach Rissöffnung wiederum können eine bessere Verankerung im Bohrloch zur Folge haben, mit dem Ergebnis, dass sich die erfindungsgemässen Spreizanker bei Rissöffnung und hoher Zugbelastung deutlich weniger weit im dem Bohrloch verschieben als Spreizanker mit geringerer Spitzenhärte an der Spreizhülse. Somit können erfindungsgemäss besonders gute Lasteigenschaften in gerissenem Beton realisiert werden.

Die Erfindung hat weiterhin erkannt, dass die hohen Restvorspannungen und damit die bessere Verankerung in gerissenem Beton und folglich die besonders guten Lasteigenschaften der erfindungsgemässen Spreizanker ihren Grund in der Interaktion des vorderen Endbereichs der Spreizhülse mit dem umgebenden Betonmaterial haben können. Dieser vorderen Endbereich wird beim gesetzten Anker vom Spreizkonus mit der umgebenden Bohrlochwand verpresst. Wird für diesen vorderen Endbereich nun entsprechend der Erfindung eine Härte über 350 HV, insbesondere über 400 HV gewählt, so plastiziert das Hülsenmaterial bei den im Bauwesen üblicherweise herrschenden Randbedingungen in der Regel nicht oder allenfalls geringfügig, und das Spreizsystem ist damit robuster, insbesondere dann, wenn sich ein Riss öffnet und die Kontaktflächen zwischen Spreizhülse und Beton dabei reduziert werden. Dieser Effekt kann zu der beobachteten deutlichen Verbesserung der Lasteigenschaften führen.

Schliesslich hat die Erfindung erkannt, dass eine hohe Hülsenhärte über 350 HV zwar einerseits die oben genannten Vorteile in gerissenem Beton mit sich bringen kann, dass die hohe Hülsenhärte aber anderseits auch nachteilig sein kann, beispielsweise im Hinblick auf die Fertigung der Spreizhülse und/oder die Lasteigenschaften des Ankers in anderen Lastsituationen. So kann beispielsweise durch eine hohe Hülsenhärte die übliche Fertigung mit einem Biegeschritt, insbesondere Wickelschritt, erschwert sein, und es steigt die Wahrscheinlichkeit, dass hierbei unrunde Hülsenquerschnitte erhalten werden, die sich wiederum negativ auf die Lasteigenschaften auswirken können. Darüber hinaus kann eine hohe Hülsenhärte potenziell den Spreizvorgang der Spreizhülse behindern. Schliesslich kann eine hohe Hülsenhärte auch mit einer gesteigerten Korrosionsneigung einhergehen.

Die Erfindung löst das besagte Dilemma dadurch, dass die hohe Hülsenhärte lediglich bereichsweise vorgesehen wird, nämlich im vorderen Hülsenbereich, welcher bei Last vom Spreizkonus mit der umgebenden Bohrlochwand verpresst wird, und in welchem somit die hohe Hülsenhärte die oben genannten Vorteile hinsichtlich der Lasteigenschaften in gerissenem Beton bewirken kann. Weiter hinten an der Spreizhülse im hinteren Hülsenbereich ist nach der Erfindung hingegen eine geringere Härte vorgesehen. Aufgrund dieser geringeren Härte im hinteren Hülsenbereich kann die Spreizhülse zum einen besonders einfach und zuverlässig aufspreizen. Weiterhin ist eine besonders einfache Herstellung durch Biegen eines Blechs zur Spreizhülse möglich, auch wenn die bereichsweise erhöhte Härte schon vor diesem Biegeschritt vorliegt. Auch ein nachträgliches induktives Härten ist besonders einfach realisierbar. Schliesslich können auch die Korrosionseigenschaften deutlich verbessert sein, da die zum Bohrlochmund weisenden Bereiche der Spreizhülse weich sind. Dabei führt die geringe Festigkeit im rückwärtigen Bereich in der Regel zu keiner Verschlechterung der Lasteigenschaften im gerissenen Beton, da der oben beschriebene Mechanismus nur an der Hülsenvorderseite stattfindet. Folglich kann nach der Erfindung ein Spreizanker erhalten werden, der in einer Vielzahl von unterschiedlichen Situationen besonders leistungsfähig und zugleich besonders zuverlässig und einfach herstellbar ist.

Unter der Härte in HV wird in fachüblicher Weise die Härte nach Vickers verstanden. Unter der Härte kann nach der Erfindung insbesondere die Oberflächenhärte an einer intakten Spreizhülse verstanden werden. Insbesondere können die erfindungsgemässen Härten bei unverspreizter Spreizhülse vorliegen, also bei einem Spreizanker im Ausganszustand, bei dem der Spreizkonus noch nicht in die Spreizhülse eingezogen ist. Der hochfeste Bereich mit der Härte grösser als 350 HV kann sich vorzugsweise ringförmig um den gesamten Umfang der der Spreizhülse erstrecken, unterbrochen allenfalls durch gegebenenfalls vorhandene Spreizschlitze. Der hochfeste Bereich kann aber auch kleiner sein, und den Umfang der Spreizhülse nur bereichsweise abdecken. Es können auch mehrere separate hochfeste Bereiche an der Vorderseite der Spreizhülse vorgesehen sein. Das hinteren Ende der Spreizhülse, zu dem hin nach der Erfindung die Härte der Spreizhülse abnimmt, ist dem vorderen Ende axial entgegengesetzt und/oder dem Spreizkonus abgewandt.

Die Spreizhülse ist erfindungsgemäss längs des Bolzens verschiebbar am Bolzen angeordnet, insbesondere befestigt. Soweit hier von "radial", "axial" und "Umfangsrichtung" die Rede ist, kann sich dies insbesondere auf die Längsachse des Bolzens beziehen, die insbesondere die Symmetrie- und/oder Mittelachse des Bolzens sein kann. Der Spreizanker kann bevorzugt ein kraftkontrolliert spreizender Spreizanker sein. Die Spreizhülse und/oder der Bolzen bestehen geeigneterweise aus einem Metallmaterial, welches, beispielsweise zur gezielten Beeinflussung der Reibung, auch beschichtet sein kann. Die hohe Härte im vorderen Bereich der Spreizhülse kann zum Beispiel durch Walzen oder/und induktives Härten erzielt werden. Vorzugsweise kann die Spreizhülse aus rostfreiem Stahl, insbesondere des Typs 1.4401 und/oder A4 und/oder des Typs 1.4301 und/oder A2 bestehen. In diesem Fall kann die hohe Härte im vorderen Bereich der Spreizhülse vorzugsweise durch Walzen erzielt werden. Sofern für die Spreizhülse alternativ ein CS Stahl zum Einsatz kommt, kann die hohe Härte im vorderen Bereich beispielsweise durch induktives Härten erhalten werden. Erfindungsgemäss wird die Spreizhülse von der schrägen Oberfläche des Spreizkonus radial nach aussen gedrängt und dabei gegen die Bohrlochwand im Substrat gepresst, wenn der Spreizkonus relativ zur Spreizhülse in Auszugsrichtung des Bolzens axial versetzt wird. Hierdurch wird der Spreizanker im Bohrloch verankert. Vorzugsweise verläuft die Auszugsrichtung parallel zur Längsachse des Bolzens und/oder zeigt aus dem Bohrloch heraus. Zweckmässigerweise nimmt der Abstand der Oberfläche des Spreizkonus von der Längsachse des Bolzens entgegen der Auszugsrichtung, das heisst mit zunehmendem Abstand von der Lastaufnahmeeinrichtung, zu. Die Oberfläche des Spreizkonus kann streng konisch sein, sie muss dies aber nicht.

Bei einem sogenannten Bolzenanker kann der Spreizkonus axial fest am Bolzen angeordnet sein. Der Spreizkonus wird dann durch eine gemeinsame axiale Bewegung des Bolzens und des Spreizkonus relativ zur Spreizhülse in die Spreizhülse eingezogen. Der Spreizkonus ist dabei vorzugsweise einstückig mit dem Bolzen ausgebildet. Alternativ kann bei einem sogenannten Hülsenanker der Spreizkonus ein vom Bolzen separates Teil sein und vorzugsweise über korrespondierende Gewinde mit dem Bolzen verbunden sein. Das Einziehen des Spreizkonus in die Spreizhülse kann dann vorzugsweise zumindest teilweise durch Rotation des Bolzens relativ zum Spreizkonus bewirkt werden, welche von einem Spindeltrieb, der von den korrespondierenden Gewinden gebildet wird, in eine Axialbewegung des Spreizkonus relativ zum Bolzen umgesetzt wird.

Vorzugsweise weist die Spreizhülse zumindest zwei Spreizsegmente auf, die über einen Steg miteinander verbunden sind. Insbesondere kann dann vorgesehen sein, dass zumindest eines der Spreizsegmente im Bereich seines vorderen Endes eine Härte grösser als 350 HV aufweist, wobei die Härte des Spreizsegments in Richtung zum hinteren Ende des Spreizsegments abnimmt. Die Spreizhülse kann auch drei oder mehr Spreizsegmente aufweisen. Der Spreizanker kann auch mehr als eine Spreizhülse und entsprechend mehr als einen Spreizkonus aufweisen.

Besonders bevorzugt ist es, dass die Spreizhülse im Bereich ihres dem Spreizkonus zugewandten vorderen Endes eine Härte grösser als 350 HV und kleiner als 500 HV aufweist. Diese Ausführungsform berücksichtigt, dass das Hülsenmaterial bei Härten über 500 HV sehr spröde wird, und dass eine brauchbare Verspreizung der Spreizhülse dann häufig nicht mehr erreicht werden kann.

Zweckmässigerweise kann vorgesehen sein, dass die Spreizhülse in zumindest einem rückwärtigen Bereich eine Härte kleiner als 340 HV, vorzugsweise kleiner als 300 HV, aufweist. Wie bereits oben erläutert kann durch eine relativ geringe Härte im rückwärtigen Bereich unter anderem eine besonders einfache und zuverlässige Montage der Spreizhülse um den Bolzen ermöglicht werden und ein besonders gutes Spreizverhalten erreicht werden, und die Korrosionseigenschaften können besonders vorteilhaft sein. Der besagte rückwärtige Bereich, der eine Härte kleiner als 340 HV beziehungsweise 300 HV aufweist, kann vorzugsweise weiter vom Spreizkonus entfernt sein als der vordere Bereich, in dem die Härte grösser als 350 HV ist. Vorzugsweise kann sich der besagte rückwärtige Bereich, der eine Härte kleiner als 340 HV beziehungsweise kleiner als 300 HV aufweist, axial mit einem Steg der Spreizhülse überlappen, das heisst er kann insbesondere zumindest bereichsweise im sogenannten Anbindebereich liegen, der zum Festlegen der Spreizhülse am Bolzen dient. In diesem Anbindebereich kann eine Härte kleiner als 340 HV, insbesondere kleiner als 300 HV, vorteilhaft sein, da dieser Bereich beim Wickeln der Spreizhülse um den Bolzen häufig stark deformiert wird. Geeigneterweise kann die Spreizhülse am Steg eine Härte kleiner als 340 HV, insbesondere kleiner als 300 HV, aufweisen. Bei dem in diesem Absatz beschriebenen Steg kann es sich insbesondere um einen Steg handeln, der zwei Spreizsegmente verbindet.

Da der Kontakt zwischen Spreizhülse und Bohrlochwand im verspreizten Zustand des Spreizankers häufig nur in den vordersten 3 bis 5 mm der Spreizhülse stattfindet, kann der vordere Bereich, in dem die Härte grösser als 350 HV ist, vorzugsweise eine Länge in Axialrichtung kleiner 10 mm aufweisen.

Weiterhin ist es zweckmässig, dass die Wandstärke der Spreizhülse zumindest bereichsweise zu ihrem vorderen Ende hin abnimmt. Hierdurch kann das Spreizverhalten noch weiter verbessert werden. Vorzugsweise weist die Spreizhülse einen Verjüngungsbereich, in welchem die Wandstärke der Spreizhülse zu ihrem vorderen Ende hin abnimmt, und einen rückseitig hieran anschliessenden Bereich mit im Wesentlichen konstanter Wandstärke auf, wobei zweckmässigerweise die Härte im Verjüngungsbereich zumindest bereichsweise grösser als 350 HV ist und/oder die Härte im Bereich mit im Wesentlichen konstanter Wandstärke zumindest bereichsweise kleiner als 340 HV, insbesondere kleiner als 300 HV, ist. Dies ist fertigungstechnisch besonders vorteilhaft, da die reduzierte Wandstärke und die erhöhte Härte im Verjüngungsbereich gleichzeitig in einem Walzschritt erzeugt werden können.

Insbesondere kann vorgesehen sein, dass die Spreizhülse zumindest einen Spreizschlitz aufweist. Der Spreizschlitz kann zwei benachbarte Spreizsegmente trennen und/oder der Steg kann in der axialen Verlängerung des Spreizschlitzes gebildet sein. Der Spreizschlitz geht vom vorderen Ende der Spreizhülse aus und kann die Deformation der Spreizhülse erleichtern.

Nach der Erfindung kann der Bolzen eine Lastaufnahmeeinrichtung aufweisen, die insbesondere als Aussengewinde oder als Innengewinde ausgebildet sein kann. Die Lastaufnahmeeinrichtung dient zur Einleitung von Zugkräften, die in Auszugsrichtung gerichtet sind, in den Bolzen. Zweckmässigerweise ist der Spreizkonus in einem ersten Endbereich des Bolzens und die Lastaufnahmeeinrichtung in einem gegenüberliegenden zweiten Endbereich des Bolzens angeordnet. Insbesondere kann der Richtungsvektor der Auszugsrichtung vom Spreizkonus zur Lastaufnahmeeinrichtung gerichtet sein.

Vorzugsweise kann die Erfindung bei Bolzenankern zum Einsatz kommen, bei denen die Spreizhülse nicht bis zum Bohrlochmund reicht. Insbesondere in diesem Fall kann der Bolzen einen Anschlag aufweisen, der eine Verschiebung der Spreizhülse vom Spreizkonus hinweg begrenzt, das heisst eine Verschiebung in Auszugsrichtung. Ein solcher Anschlag kann in besonders einfacher Weise gewährleisten, dass die Spreizhülse zuverlässig zusammen mit dem Bolzen in das Bohrloch eindringt. Vorzugsweise ist der Anschlag eine Ringschulter, was fertigungstechnisch und im Hinblick auf die Zuverlässigkeit vorteilhaft sein kann. Insbesondere ist der Anschlag axial zwischen dem Spreizkonus und der Lastaufnahmeeinrichtung angeordnet.

Die Erfindung betrifft auch ein Herstellungsverfahren, bei dem ein erfindungsgemässer Spreizanker erhalten wird. Bei diesem Verfahren wird die Härte grösser als 350 HV im Bereich des vorderen Endes der Spreizhülse in einem Walzschritt erzeugt. Durch Verwendung eines solchen Walzschrittes können der Verjüngungsbereich der Spreizhülse und die Härte grösser als 350 HV zugleich erzeugt werden. Insbesondere kann vorgesehen sein, dass im Walzschritt ein Walzwerkzeug verwendet wird, dessen Rotationsachse parallel zum zumindest einen Spreizschlitz und/oder zur späteren Längsachse des Spreizankers und/oder zur späteren Längsachse der Spreizhülse verläuft.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine teilweise längsgeschnittene Ansicht eines in einem Betonsubstrat gesetzten erfindungsgemässen Spreizankers;
- Figur 2:: eine abgewickelte Ansicht der Aussenseite der Spreizhülse des Ankers aus Figur 1; ,
- Figur 3:: eine Längsschnittansicht B-B durch die Spreizhülse aus Figur 2 und darunter der Härteverlauf entlang des Schnitts; und
- Figur 4:: eine teilweise längsgeschnittene Ansicht eines in einem Betonsubstrat gesetzten erfindungsgemässen Spreizankers gemäss einer zweiten Ausführungsform.

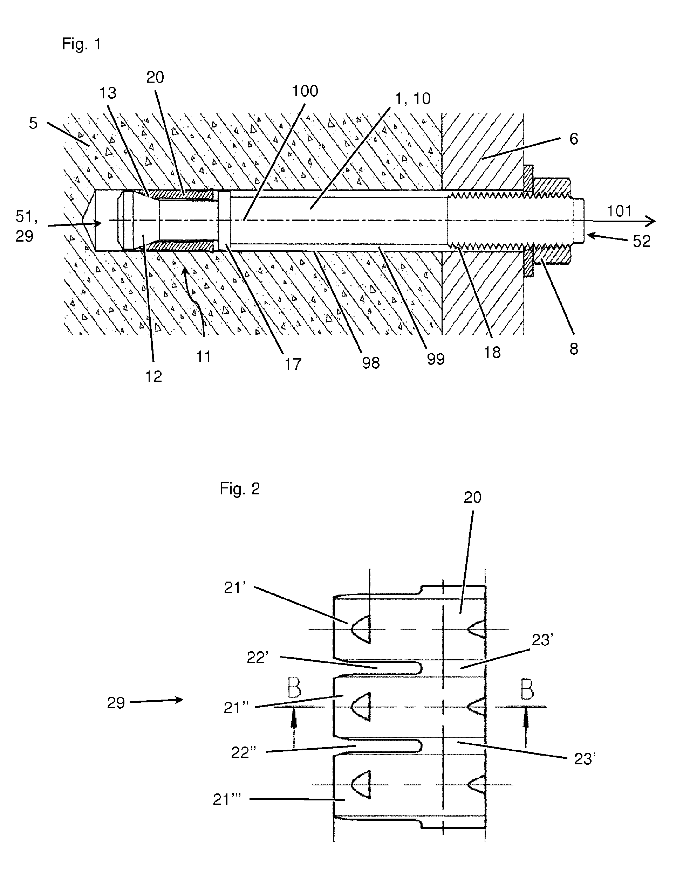

Die Figuren 1 bis 3 zeigen ein Ausführungsbeispiel eines erfindungsgemässen Spreizankers 1. Wie insbesondere Figur 1 zeigt, weist der Spreizanker 1 einen Bolzen 10 und eine Spreizhülse 20 auf, wobei die Spreizhülse 20 den Bolzen 10 ringförmig umgibt. Im Bereich seines vorderen Endes 51 weist der Bolzen 10 einen Spreizkonus 12 für die Spreizhülse 20 auf, an den sich rückwärtig ein Halsbereich 11 stetig anschliesst.

Im Halsbereich 11 weist der Bolzen 10 einen im Wesentlichen konstanten zylindrischen Querschnitt auf. Am hieran anschliessenden Spreizkonus 12 ist die Oberfläche des Bolzens 10 als Schrägfläche 13 ausgebildet, und der Durchmesser des Bolzens 10 nimmt dort zum ersten Ende 51 hin zu, das heisst der Bolzen 10 weitet sich am Spreizkonus 12 ausgehend vom Halsbereich 11 zu seinem vorderen ersten Ende 51 hin auf. Die Schrägfläche 13 am Spreizkonus 12 kann konisch im streng mathematischen Sinne sein, muss dies aber nicht.

Auf der dem Spreizkonus 12 abgewandten Seite des Halsbereichs 11 weist der Bolzen 10 einen beispielsweise als Ringschulter ausgebildeten Anschlag 17 für die Spreizhülse 20 auf. Im Bereich seines rückwärtigen Endes 52 weist der Bolzen eine Lastaufnahmeeinrichtung 18 zur Einleitung von Zugkräften in den Bolzen 10 auf, die hier beispielhaft als Aussengewinde ausgebildet ist. Auf diesem Aussengewinde sitzt eine Mutter 8.

Beim Setzen des Spreizankers 1 wird der Bolzen 10 mit seinem ersten Ende 51 voran in Richtung der Längsachse 100 des Bolzens 10 in ein Bohrloch 99 im Substrat 5 aus Figur 1 geschoben. Aufgrund des Anschlags 17, der eine Verschiebung der Spreizhülse 20 vom Spreizkonus 12 hinweg begrenzt, wird dabei auch die Spreizhülse 20 in das Bohrloch 99 eingebracht. Sodann wird der Bolzen 10, beispielsweise durch Anziehen der Mutter 8, wieder ein Stück weit in der parallel zur Längsachse 100 verlaufenden Auszugsrichtung 101 aus dem Bohrloch 99 herausgezogen. Aufgrund ihrer Reibung an der im Wesentlichen zylindrischen Wand 98 des Bohrlochs 99 bleibt die Spreizhülse 20 dabei im Bohrloch 99 zurück und es kommt infolgedessen zu einer Verschiebung des Bolzens 10 relativ zur Spreizhülse 20. Bei dieser Verschiebung dringt die Schrägfläche 13 des Spreizkonus 12 des Bolzens 10 immer tiefer so in die Spreizhülse 20 ein, dass die Spreizhülse 20 im Bereich ihres vorderen Endes 29 von der Schrägfläche 13 radial aufgeweitet und mit der Wand 98 des Bohrlochs 99 verpresst wird. Durch diesen Mechanismus wird der Spreizanker 1 im Substrat 5 fixiert. Der gesetzte Zustand des Spreizankers 1, in dem er im Substrat 5 fixiert ist, ist in Figur 1 gezeigt. Mittels der Mutter 8 kann ein Anbauteil 6 am Substrat 5 festgelegt werden.

Wie insbesondere in Figur 2 erkennbar ist, weist die Spreizhülse 20 drei Spreizsegmente 21', 21", 21"' auf, wobei benachbarte Spreizsegmente 21 durch Spreizschlitze 22', 22" teilweise voneinander getrennt sind. Die Spreizschlitze 22 gehen vom vorderen Ende 29, das heisst von derjenigen Stirnseite der Spreizhülse 20 aus, die dem Spreizkonus 12 zugewandt ist. In der Verlängerung der Spreizschlitze 22', 22" ist jeweils ein Steg 23' beziehungsweise 23" gebildet, wobei die Stege 23 jeweils zwei benachbarte Spreizsegmente 21 miteinander verbinden.

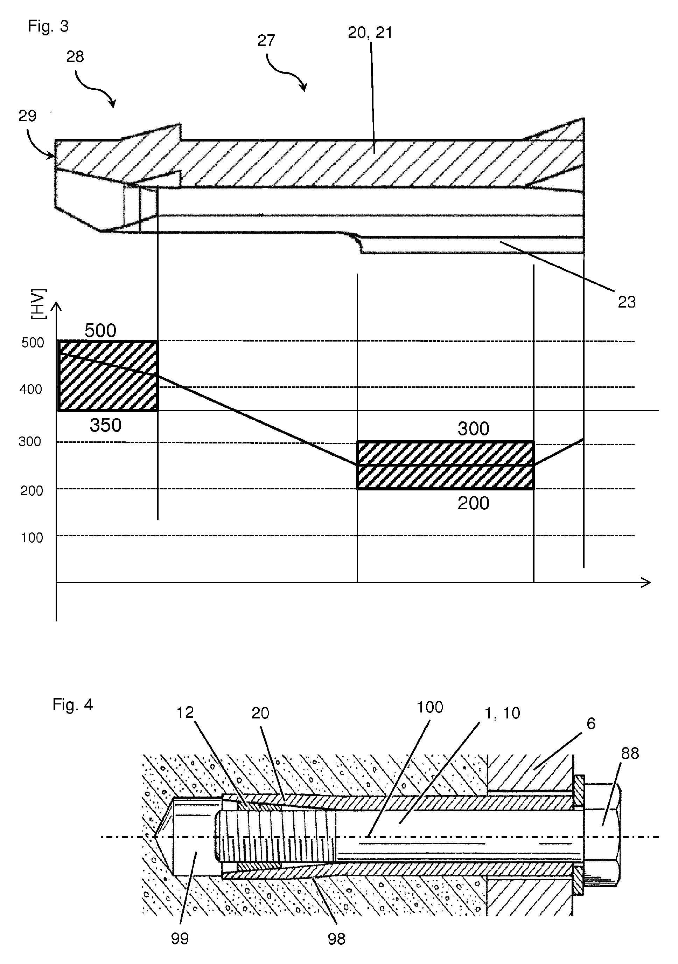

Wie insbesondere Figur 3 zeigt, weisen die Spreizsegmente 21 der Spreizhülse 20, insbesondere im Längsschnitt, jeweils einen Bereich 27 mit im Wesentlichen konstanter Wandstärke auf. An diesen Bereich 27 mit im Wesentlichen konstanter Wandstärke schliesst sich, insbesondere im Längsschnitt, vorderseitig ein Verjüngungsbereich 28 an, in dem die Wandstärke des Spreizsegments 21 zum vorderen Ende 29 hin abnimmt.

Wie Figur 3 weiter zeigt, liegt die Härte zumindest eines der Spreizsegmente 21 in seinem rückwärtigen Bereich 27 mit im wesentlichen konstanter Wandstärke zumindest bereichsweise, insbesondere in Axialrichtung auf Höhe des Steges 23, unter 340 HV und vorzugsweise unter 300 HV. Vorzugsweise liegt die Härte dort zwischen 200 HV und 300 HV, insbesondere bei etwa 250 HV. Von dort aus nimmt die Härte zum vorderen Ende 29 des Spreizsegments 21 hin zu und erreicht im Verjüngungsbereich 28, insbesondere in den vordersten 3 bis 5 mm des Spreizsegments 21, eine Härte grösser 350 HV, insbesondere zwischen 350 HV und 500 HV.

Beim Ausführungsbeispiel der Figur 1 ist der Spreizanker 1 als sogenannter Bolzenanker ausgeführt. Ein weiteres Ausführungsbeispiel, bei dem der Spreizanker 1 als sogenannter Hülsenanker ausgebildet ist, ist in Figur 4 gezeigt. Im Gegensatz zum Bolzenanker aus Figur 1, bei dem der Spreizkonus 12 axial fest am Bolzen 10 vorgesehen ist und insbesondere einstückig mit dem Bolzen 10 ausgebildet ist, ist der Spreizkonus 12 beim Hülsenanker der Figur 4 ein vom Bolzen 10 separates Teil. Er weist ein Innengewinde auf, welches mit einem Aussengewinde am Bolzen 10 korrespondiert. Darüber hinaus reicht beim Hülsenanker der Figur 4 die Spreizhülse 20, die auch mehrteilig sein kann, bis zum Bohrlochmund, und am rückwärtigen Ende des Bolzens 10 ist ein verbreiterter Kopf 88 drehfest am Bolzen 10 angeordnet.

Zum Setzen des Ankers der Figur 4 wird der Bolzen 10 über den Kopf 88 um die Längsachse 100 in Drehung versetzt. Die korrespondierenden Gewinde wandeln diese Drehbewegung des Bolzens 10 in eine Axialbewegung des Spreizkonus 12 relativ zum Bolzen 10 und damit relativ zur Spreizhülse 20 um, was zum Einziehen des Spreizkonus 12 in die Spreizhülse 20 führt.

Das Härteprofil der Spreizhülse 20 des Hülsenankers aus Figur 4 ist nach der Erfindung entsprechend Figur 3 ausgestaltet, wobei bei einem Hülsenanker gemäss Figur 4 der niederfeste rückwärtige Bereich 27 mit im wesentlichen konstanter Wandstärke in der Regel axial länger ist als in Figur 3 dargestellt.

## Patentansprüche

1. Spreizanker (1) mit
- einem Bolzen (10) und
- einer Spreizhülse (20), welche den Bolzen (10) umgibt,
- wobei am Bolzen (10) ein Spreizkonus (12) angeordnet ist, welcher die Spreizhülse (20) radial aufweitet, wenn er in die Spreizhülse (20) eingezogen wird,
**dadurch gekennzeichnet,**
**dass** die Spreizhülse (20) im Bereich ihres dem Spreizkonus (12) zugewandten, vorderen Endes (29) eine Härte grösser als 350 HV aufweist, wobei die Härte der Spreizhülse (20) zum hinteren Ende der Spreizhülse (20) hin abnimmt.

2. Spreizanker (1) nach Anspruch 1,
**dadurch gekennzeichnet,**
**dass** die Spreizhülse (20) im Bereich ihres dem Spreizkonus (12) zugewandten, vorderen Endes (29) eine Härte grösser als 350 HV und kleiner als 500 HV aufweist.

3. Spreizanker (1) nach einem der vorstehenden Ansprüche,
**dadurch gekennzeichnet,**
**dass** die Spreizhülse (20) in zumindest einem rückwärtigen Bereich, der sich vorzugsweise axial mit einem Steg (23) der Spreizhülse (20) überlappt, eine Härte kleiner als 340 HV, vorzugsweise kleiner als 300 HV, aufweist.

4. Spreizanker (1) nach einem der vorstehenden Ansprüche,
**dadurch gekennzeichnet,**
**dass** die Wandstärke der Spreizhülse (20) zumindest bereichsweise zu ihrem vorderen Ende (29) hin abnimmt.

5. Spreizanker (1) nach einem der vorstehenden Ansprüche,
**dadurch gekennzeichnet,**
**dass** die Spreizhülse (20) zumindest einen Spreizschlitz (22) aufweist.

6. Spreizanker nach einem der vorstehenden Ansprüche,
**dadurch gekennzeichnet,**
**dass** der Bolzen (10) eine Lastaufnahmeeinrichtung (18), insbesondere ein Gewinde, aufweist, welche zur Einleitung von Zugkräften in den Bolzen (10) geeignet ist.

7. Spreizanker nach einem der vorstehenden Ansprüche,
**dadurch gekennzeichnet,**
**dass** der Bolzen (10) einen Anschlag (17), beispielsweise eine Ringschulter, aufweist, der eine Verschiebung der Spreizhülse (20) vom Spreizkonus (12) hinweg begrenzt.

8. Herstellungsverfahren, bei dem ein Spreizanker nach einem der vorstehenden Ansprüche erhalten wird, und bei dem die Härte grösser als 350 HV im Bereich des vorderen Endes der Spreizhülse (20) in einem Walzschritt erzeugt wird.
